# EUROPEAN PATENT SPECIFICATION

(11) **EP 4 620 047 B1**
(45) Date of publication and mention of the grant of the patent: **11.11.2026**
(21) Application number: 22818712.6
(22) Date of filing: 18.11.2022
(51) Int. Cl.: H01M 8/2475, H01M 8/0432, H01M 8/04746, H01M 8/04082

(54) **A HYDROGEN REMOVAL ARRANGEMENT FOR A FUEL CELL SYSTEM**
WASSERSTOFFENTFERNUNGSANORDNUNG FÜR EIN BRENNSTOFFZELLENSYSTEM
DISPOSITIF D'ÉLIMINATION D'HYDROGÈNE POUR SYSTÈME DE PILE À COMBUSTIBLE

(43) Date of publication of application: 24.09.2025
(73) Proprietor: VOLVO TRUCK CORPORATION, 405 08 Göteborg (SE)
(72) Inventor: LUNDGREN, Staffan, 438 53 Hindås (SE)
(74) Representative: Kransell & Wennborg KB
(86) International application number: PCT/EP2022/082421
(87) International publication number: WO 2024/104596

(56) References cited:
- JP-B2- 3 702 011
- JP-B2- 5 389 520
- JP-B2- 5 916 707

## Description

### TECHNICAL FIELD

The disclosure relates generally to systems using hydrogen as an energy source for generating power, such as fuel cell systems, but it may also regard hydrogen powered combustion engines. In particular aspects, the disclosure relates to a hydrogen removal arrangement, a hydrogen powered system, such as a fuel cell system, a method, a computer program product, a non-transitory computer-readable storage medium and a control system. The disclosure can be applied in heavy-duty vehicles, such as trucks, buses, and construction equipment. Although the disclosure may be described with respect to a particular vehicle, the disclosure is not restricted to any particular vehicle.

### BACKGROUND

A hydrogen powered system, such as a fuel cell system for generating electric power or a hydrogen powered combustion engine, may be used in a vehicle for propulsion.

A fuel cell is an electrochemical cell which converts chemical energy into electricity. The fuel cell converts the chemical energy of a fuel, typically hydrogen, and an oxidizing agent, typically oxygen, into electricity. Accordingly, a fuel cell can be used as an alternative or as a complement to electric batteries. In recent years fuel cells have been considered for powering electric vehicles, such as pure electric vehicles and hybrid electric vehicles.

Typically, a fuel cell system for a vehicle comprises a fuel cell stack comprising one or more fuel cells. In addition, the fuel cell system may comprise a turbo and a humidifier. The turbo comprises a turbine and a compressor which are drivingly connected. During use of the fuel cell system, an inlet airflow to the fuel cell stack flows via the compressor and the humidifier. The inlet airflow delivers the above-mentioned oxidizing agent to the fuel cell(s). An outlet airflow from the fuel cell stack flows via the humidifier and the turbine until it exits into an external environment. Some or all of the outlet airflow may bypass the humidifier at certain occasions. During use, the humidifier transfers water, or water and heat, from the outlet airflow to the inlet airflow. There are also examples of fuel cell systems which do not use a humidifier and/or a turbo. For example, water injectors and water separators may be used to humidify the inlet airflow and to dehumidify the outlet airflow.

Hydrogen for the fuel cell(s) is typically stored in one or more hydrogen tanks. The hydrogen tanks may be located in the vicinity of the fuel cell(s) in a hydrogen tank compartment for storing the one or more hydrogen tanks.

Hydrogen is a highly flammable gas and therefore it should be handled with care during use. For example, a leakage of hydrogen from a hydrogen powered vehicle may lead to an explosion in the vicinity of the vehicle.

In view of the above, there is a strive to develop improved technology relating to hydrogen powered systems. For example, there is a strive to develop improved technology which increase the safety of hydrogen powered vehicles. Documents JP5916707B2 and JP3702011B2 disclose fuel cell systems with ventilated compartments and oxidation catalysts. Document JP5389520B2 discloses a fuel cell system with a fan, whose speed is controlled based on a catalyst temperature.

### SUMMARY

According to the invention, which includes the first aspect and the second aspect of the disclosure, there is provided a hydrogen powered system comprising a hydrogen removal arrangement, wherein the hydrogen powered system comprises a hydrogen powered system compartment comprising one or more hydrogen consumers and a hydrogen tank compartment for storing one or more hydrogen tanks, the hydrogen removal arrangement comprising:
- a duct member arranged to be fluidly connected to the hydrogen powered system compartment and the hydrogen tank compartment, and further arranged to extract ventilation air therethrough from the hydrogen powered system compartment and the hydrogen tank compartment to an external environment during use,
- a first motorized fan associated with the duct member for extracting the ventilation air through the duct member,
- a hydrogen oxidation catalyst provided in the duct member for oxidizing hydrogen,
- a first temperature sensor for measuring a first temperature of the hydrogen oxidation catalyst during use, and
- a control unit for controlling a speed of the first motorized fan, wherein the control unit is communicatively connected to the first motorized fan and to the first temperature sensor, and wherein the control unit is configured to control the speed of the first motorized fan during use in dependence on the first temperature measured by the first temperature sensor.

The first aspect of the disclosure may seek to increase the safety of a hydrogen powered system, in particular the safety of a fuel cell system for a vehicle. A technical benefit may include to reduce the risk of hydrogen leakage from the hydrogen powered system. Thereby, the risk of an explosion caused by a hydrogen leakage may be reduced or avoided, such as in the vicinity of a hydrogen powered vehicle. A further technical benefit of examples disclosed herein may include that a cost-effective hydrogen removal arrangement is provided in which hydrogen is oxidized in a fast and energy efficient manner.

In some examples, the control unit is configured to increase the speed of the first motorized fan during use in dependence on an increase of the first temperature measured by the first temperature sensor. An increase of the first temperature may be indicative of an increase in hydrogen oxidation by the hydrogen oxidation catalyst. Accordingly, an increased first temperature may also be indicative of an increased hydrogen leakage. As such, by increasing the speed of the first motorized fan, i.e. so that more ventilation air is extracted through the duct member, hydrogen may be oxidized by the hydrogen oxidation catalyst at a higher rate. Thereby, the risk of unwanted hydrogen leakage may be further reduced or avoided. In some examples, the control unit is configured to decrease the speed of the first motorized fan during use in dependence on a decrease of the first temperature measured by the first temperature sensor. Thereby, energy may be saved.

In some examples, the hydrogen removal arrangement further comprises a second temperature sensor for measuring a second temperature of the hydrogen oxidation catalyst during use, wherein the control unit is further communicatively connected to the second temperature sensor, wherein the first and second temperature sensors are configured to measure a temperature gradient over the hydrogen oxidation catalyst, and wherein the control unit is configured to increase the speed of the first motorized fan during use in dependence on an increase of the temperature gradient measured by the first and the second temperature sensors. Thereby, by measuring a temperature gradient, and not only one temperature value associated with the hydrogen oxidation catalyst, a more reliable indication of an amount of hydrogen which is present in the extracted ventilation air may be provided. For example, other factors, such as sudden temperature increases in the external environment, may not affect the temperature gradient. Hence, by measuring and using the temperature gradient, a safer hydrogen powered system may be provided. In some examples, the control unit is configured to decrease the speed of the first motorized fan during use in dependence on a decrease of the temperature gradient measured by the first and the second temperature sensors.

In some examples, the hydrogen removal arrangement comprises a hydrogen sensor for measuring a hydrogen content of the ventilation air, wherein the hydrogen sensor is located in the duct member upstream the hydrogen oxidation catalyst. By upstream is herein meant upstream with respect to the direction of the extracted ventilation air. By measuring a hydrogen content, a more correct indication of the level of the hydrogen leakage may be obtained. The hydrogen sensor may also provide redundancy, i.e. a second indication of the amount of hydrogen in the ventilation air. Thereby, a safer hydrogen powered system may be obtained. The hydrogen sensor is typically communicatively connected to the control unit, wherein the control unit may be configured to take control actions in dependence on the hydrogen content measured by the hydrogen sensor, such as increasing and/or decreasing the speed of the first motorized fan.

In some examples, the hydrogen oxidation catalyst is adapted to oxidize hydrogen at room temperature. Thereby, hydrogen may be oxidized without e.g. a need to heat the hydrogen oxidation catalyst. As such, a safer hydrogen powered system may be provided, in which hydrogen may be oxidized in more situations.

In some examples, the hydrogen oxidation catalyst comprises platinum as oxidizing agent. Platinum has shown to be a cost-effective material for oxidizing hydrogen without e.g. a need to heat the hydrogen oxidation catalyst during use. In other non-limiting examples, the hydrogen oxidation catalyst comprises any one of palladium, nickel, nickel oxide, a ruthenium-nickel composition, an iron-nitrogen-coal composition.

In some examples, the hydrogen oxidation catalyst is a monolithic catalyst. A monolithic catalyst has shown to be a cost-effective catalyst for oxidizing hydrogen, without e.g. a need to heat the catalyst during use for the oxidation.

In some examples, the hydrogen removal arrangement further comprises an auxiliary motorized fan located outside the duct member and fluidly connected to the hydrogen powered system compartment and the hydrogen tank compartment, wherein the auxiliary motorized fan is a fan with a larger ventilation capacity compared to the first motorized fan, and wherein the control unit is configured to activate and/or increase the speed of the auxiliary motorized fan during use when the first temperature measured by the first temperature sensor exceeds a first threshold and/or when the temperature gradient measured by the first and the second temperature sensors exceeds a second threshold. Thereby, further increased safety may be achieved. The auxiliary motorized fan may for example be a fan which is configured to be operated while the hydrogen powered system is in operation. The first motorized fan, on the other hand, may be configured to be operated and running at least when the hydrogen system is turned off and/or in an idle mode.

In some examples, the hydrogen removal arrangement further comprises a heater for heating the hydrogen oxidation catalyst, wherein the control unit is configured to activate the heater when the first temperature and/or the second temperature is below a water freezing temperature threshold. Thereby, ice formation in the duct member may be avoided, such as during cold conditions below the water freezing temperature.

In some examples, the hydrogen removal arrangement further comprises a permanent magnet electric motor for motorizing the first motorized fan. Thereby, any unwanted sparks may be avoided. More specifically, a permanent magnet electric motor may not induce any sparks when in use. As such, further improved safety may be achieved.

In some examples, the control unit is further configured to issue a warning signal when the first temperature exceeds a third threshold and/or when the temperature gradient exceeds a fourth threshold, and/or further configured to issue a warning signal when a hydrogen content measured by the hydrogen sensor exceeds a hydrogen content threshold. Thereby, a user may be warned at an early stage that there is a hydrogen leakage which is too large. As such, further improved safety may be achieved.

In some examples, the hydrogen removal arrangement is arranged to continuously or repeatedly extract ventilation air through the duct member by use of the first motorized fan. As such, the hydrogen removal arrangement may at least extract ventilation air through the duct member when the hydrogen powered system is turned off and/or in an idle mode. For example, the hydrogen removal arrangement may be configured to be activated, by at least activating the first motorized fan, when the hydrogen system is turned off and/or provided in an idle mode. The control unit and any one of the first temperature sensor, the second temperature sensor and the hydrogen sensor may also be configured to be activated when the hydrogen system is turned off and/or provided in an idle mode. In some examples, the hydrogen removal arrangement may be configured to be deactivated, by at least deactivating the first motorized fan, when the hydrogen system is turned on and/or provided in an operation mode differing from the idle mode. In further examples, the control unit and any one of the first temperature sensor, the second temperature sensor and the hydrogen sensor may also be configured to be deactivated when the hydrogen system is turned on and/or provided in an operation mode differing from the idle mode.

In some examples, the first motorized fan is located inside the duct member. Thereby, a more efficient extraction of ventilation air may be achieved. In addition, this also implies a more compact hydrogen removal arrangement.

The hydrogen powered system may be a fuel cell system comprising a fuel cell system compartment comprising one or more fuel cells and a hydrogen tank compartment for storing one or more hydrogen tanks, and further comprising a hydrogen removal arrangement according to any one of the examples of the first aspect of the disclosure. In other examples, the hydrogen powered system is a hydrogen powered combustion engine system comprising a hydrogen powered combustion engine system compartment comprising one or more hydrogen combustion engines and a hydrogen tank compartment for storing one or more hydrogen tanks, and further comprising a hydrogen removal arrangement according to any one of the examples of the first aspect of the disclosure. The one or more hydrogen combustion engines may be configured to only, or at least partly, use hydrogen as fuel.

In some examples, the duct member is mounted at a position at least partly above the hydrogen powered system compartment and the hydrogen tank compartment, as seen with respect to a vertical direction of the fuel cell system. Thereby, the hydrogen removal arrangement may more efficiently ventilate any hydrogen leakage from the hydrogen powered system compartment and the hydrogen tank compartment.

In some examples, the hydrogen powered system is arranged to extract purge gas therefrom during use, wherein the hydrogen powered system is arranged to extract the purge gas through the duct member. Thereby, the hydrogen removal arrangement may be efficiently used for at least two purposes, i.e. to safely handle any hydrogen leakage, such as when the hydrogen powered system is turned off or in an idle mode, and when purge gas is extracted.

According to a third aspect of the disclosure, there is provided a vehicle comprising the hydrogen powered system according to the second aspect of the disclosure.

Advantages and effects of the third aspect of the disclosure are analogous to the advantages and effects of the first and second aspects of the disclosure.

According to a fourth aspect of the disclosure, there is provided a method for controlling a hydrogen removal arrangement for a hydrogen powered system according to any one of the examples of the first aspect of the disclosure, the method comprising:
- measuring, by the first temperature sensor, a first temperature of the hydrogen oxidation catalyst during use,
- controlling, by the control unit, the speed of the first motorized fan during use in dependence on the first temperature measured by the first temperature sensor.

Advantages and effects of the fourth aspect of the disclosure are analogous to the advantages and effects of the first, second and third aspects of the disclosure.

In some examples, controlling the speed of the first motorized fan comprises increasing the speed of the first motorized fan during use in dependence on an increase of the first temperature measured by the first temperature sensor. In further examples, controlling the speed of the first motorized fan comprises decreasing the speed of the first motorized fan during use in dependence on a decrease of the first temperature measured by the first temperature sensor

In some examples, the hydrogen removal arrangement comprises a second temperature sensor as mentioned in the above, wherein method further comprises:
- measuring, by the second temperature sensor, a second temperature of the hydrogen oxidation catalyst during use,
- determining, by the control unit, a temperature gradient over the hydrogen oxidation catalyst by the measured first and second temperatures, and wherein controlling the speed of the first motorized fan comprises increasing the speed of the first motorized fan during use in dependence on an increase of the temperature gradient.

In some examples, controlling the speed of the first motorized fan comprises decreasing the speed of the first motorized fan during use in dependence on a decrease of the temperature gradient.

According to a fifth aspect of the disclosure, there is provided a computer program product comprising program code for performing, when executed by a control unit, the method of any example of the fourth aspect of the disclosure.

According to a sixth aspect of the disclosure, there is provided a non-transitory computer-readable storage medium comprising instructions, which when executed by a control unit, cause the control unit to perform the method of any example of the fourth aspect of the disclosure.

According to a seventh aspect of the disclosure, there is provided a control system comprising one or more control units configured to perform the method according to any example of the fourth aspect of the disclosure.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 is a side view of a vehicle according to an example of the disclosure.
Fig. 2 is a schematic view of a hydrogen removal arrangement according to an example of the disclosure.
Fig. 3 is a schematic view of a hydrogen powered system according to an example of the disclosure.
Figs. 4a-b are flowcharts of methods according to examples of the disclosure.
Fig. 5 is a schematic view of a hydrogen removal arrangement according to an example of the disclosure.
Fig. 6 is a is a schematic diagram of an exemplary computer system for implementing examples disclosed herein, according to one example.

The drawings show diagrammatic exemplifying embodiments of the present disclosure and are thus not necessarily drawn to scale. It shall be noted that some details in the drawings may be exaggerated in order to better describe and illustrate the disclosure. Like reference characters refer to like elements throughout the description, unless expressed otherwise.

### DETAILED DESCRIPTION

Aspects set forth below represent the necessary information to enable those skilled in the art to practice the disclosure.

By the present disclosure, safety for a hydrogen powered system, such as a fuel cell system, may be improved. In addition, a cost-effective hydrogen removal arrangement may be provided in which hydrogen is oxidized in a fast and energy efficient manner. As such, by the present disclosure, at least one drawback of the prior art is at least partly alleviated, or at least one suitable alternative is provided.

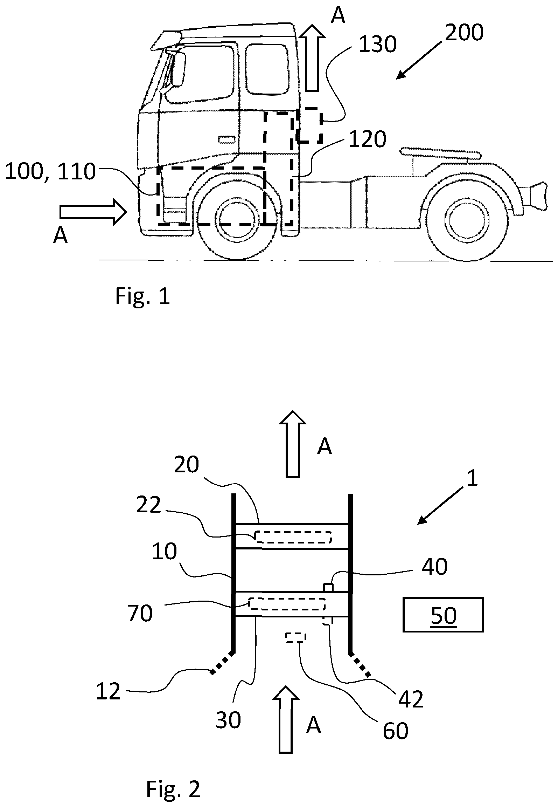

Fig. 1 depicts a side view of a vehicle 200 according to an example of the disclosure. The vehicle 200 is in this example a truck, and more particularly a towing truck or tractor, for towing one or more trailers (not shown). It shall however be understood that the vehicle is not limited only to this type of vehicle, but any other type of vehicle may also be used, such as a bus, a construction equipment, a passenger car or a marine vessel. Construction equipment may be a work machine, such as a wheel loader, a dump truck, an excavator, etc. The vehicle 200 comprises a hydrogen powered system 100 according to an example of the present disclosure. The hydrogen powered system 100 comprises a hydrogen powered system compartment 110 and a hydrogen tank compartment 120. The hydrogen powered system compartment 110 comprises one or more hydrogen consumers (not shown in fig. 1) and the hydrogen tank compartment 120 comprises one or more hydrogen tanks (not shown in fig. 1), i.e. the hydrogen tank compartment 120 stores the one or more hydrogen tanks. The hydrogen powered system compartment 110 and/or the hydrogen tank compartment 120 may be at least partly airtight so that air A therefrom is directed through a ventilation system 130 during use, which may be part of a cooling system of the hydrogen powered system 100. Accordingly, the ventilation system 130 may direct air A through the hydrogen powered system compartment 110 and the hydrogen tank compartment 120. The hydrogen powered system 100 may be a fuel cell system comprising one or more fuel cells for providing propulsion force to the vehicle 200. Alternatively, the hydrogen powered system 100 may be a hydrogen powered combustion engine.

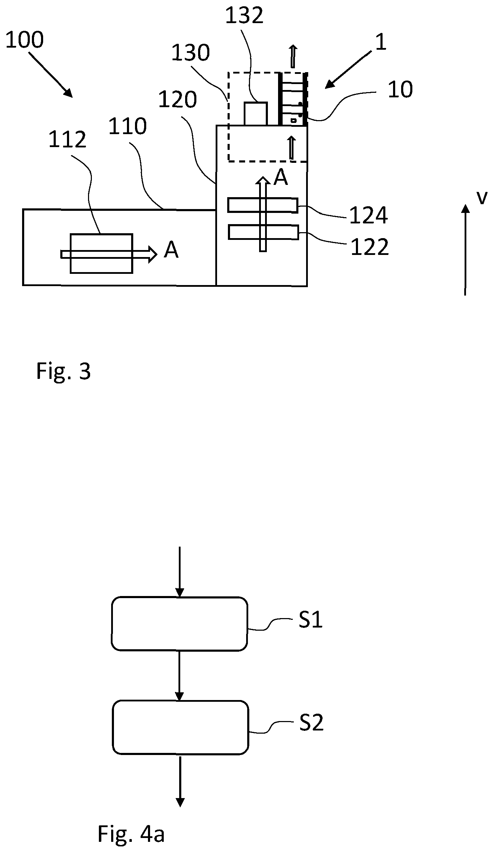

Fig. 2 depicts a schematic illustration of a hydrogen removal arrangement 1 for a hydrogen powered system 100 according to an example of the present disclosure. The hydrogen powered system 100 may for example be a system 100 as shown in fig. 1 and fig. 3.

The hydrogen removal arrangement 1 comprises:
- a duct member 10 which is arranged to be fluidly connected to the hydrogen powered system compartment 110 and the hydrogen tank compartment 120, and further arranged to extract ventilation air A therethrough from the hydrogen powered system compartment 110 and the hydrogen tank compartment 120 to an external environment during use. The hydrogen removal arrangement 1 further comprises:
- a first motorized fan 20 associated with the duct member 10 for extracting the ventilation air A through the duct member 10,
- a hydrogen oxidation catalyst 30 provided in the duct member 10 for oxidizing hydrogen,
- a first temperature sensor 40 for measuring a first temperature of the hydrogen oxidation catalyst 30 during use, and
- a control unit 50 for controlling a speed of the first motorized fan 20, wherein the control unit 50 is communicatively connected to the first motorized fan 20 and to the first temperature sensor 40, and wherein the control unit 50 is configured to control the speed of the first motorized fan 20 during use in dependence on the first temperature measured by the first temperature sensor 40.

The control unit 50 is typically an electronic control unit comprising software and/or hardware for performing methods as disclosed herein. The control unit 50 may be one single control unit or it may be formed as several communicatively connected sub-control units. In some examples, the control unit may be denoted a computer.

The duct member 10 may have any kind of form, as long as it can extract ventilation air A. For example, the duct member 10 may be a cylinder-shaped hollow member.

The control unit 50 may be configured to increase the speed of the first motorized fan 20 during use in dependence on an increase of the first temperature measured by the first temperature sensor 40. An increase of the first temperature may be indicative of an increase in hydrogen oxidation by the hydrogen oxidation catalyst 30. Accordingly, an increased first temperature may also be indicative of an increased hydrogen leakage. As such, by increasing the speed of the first motorized fan 20, i.e. so that more ventilation air A is extracted through the duct member 10 at a higher rate, hydrogen may be oxidized by the hydrogen oxidation catalyst 30 at a higher rate. Thereby, the risk of unwanted hydrogen leakage may be further reduced or avoided.

As may be further gleaned from fig. 2, the hydrogen removal arrangement 1 may further comprise a second temperature sensor 42 for measuring a second temperature of the hydrogen oxidation catalyst 30 during use, wherein the control unit 50 is further communicatively connected to the second temperature sensor 42, wherein the first and second temperature sensors 40, 42 are configured to measure a temperature gradient over the hydrogen oxidation catalyst 30, and wherein the control unit 50 is configured to increase the speed of the first motorized fan 20 during use in dependence on an increase of the temperature gradient measured by the first and the second temperature sensors 40, 42. In the shown example, the first temperature sensor 40 is mounted at a position directly downstream of the hydrogen oxidation catalyst 30 and the second temperature sensor 42 is mounted at a position directly upstream of the hydrogen oxidation catalyst 30. As such, a temperature gradient over the hydrogen oxidation catalyst 30 may be measured.

Fig. 2 further depicts that the hydrogen removal arrangement 1 may further comprise a hydrogen sensor 60 for measuring a hydrogen content of the ventilation air A, wherein the hydrogen sensor 60 is located in the duct member 10 upstream the hydrogen oxidation catalyst 30. Accordingly, hydrogen content of the ventilation air A before entering the hydrogen oxidation catalyst may be measured.

The hydrogen oxidation catalyst 30 may be adapted to oxidize hydrogen at room temperature. For example, the hydrogen oxidation catalyst 30 may comprise platinum as oxidizing agent, which may be used for oxidizing hydrogen in an efficient manner without e.g. a need to heat the hydrogen oxidation catalyst 30 above room temperature. Additionally, or alternatively, the hydrogen oxidation catalyst 30 may be a monolithic catalyst.

The hydrogen removal arrangement 1 may further comprise a heater 70 for heating the hydrogen oxidation catalyst 30, wherein the control unit 50 is configured to activate the heater 70 when the first temperature and/or the second temperature is below a water freezing temperature threshold. The heater 70 is preferably mounted at a position adjacent to, and/or at least to some extent inside, the hydrogen oxidation catalyst 30. Thereby it can be prevented that any ice formation is hindering the hydrogen oxidation catalyst 30 from oxidizing hydrogen.

The hydrogen removal arrangement 1 may further comprise a permanent magnet electric motor 22 for motorizing the first motorized fan 20. Thereby it can be avoided that any sparks are generated when the first motorized fan 20 is in use.

The control unit 50 may further be configured to issue a warning signal when the first temperature exceeds a third threshold and/or when the temperature gradient exceeds a fourth threshold, and/or further configured to issue a warning signal when a hydrogen content measured by the hydrogen sensor 60 exceeds a hydrogen content threshold. The third and fourth thresholds, and the hydrogen content threshold, may be set to a respective level so that the control unit 50 warns when there is a too high hydrogen leakage, e.g. so high that there is an explosion risk.

The hydrogen removal arrangement 1 may be arranged to continuously or repeatedly extract ventilation air A through the duct member 10 by use of the first motorized fan 20.

As further depicted in fig. 2, the first motorized fan 20 may be located inside the duct member 10, implying a compact configuration in which ventilation air A can be efficiently extracted through the duct member 10. As further depicted in fig. 2, the first motorized fan 20 may be mounted at a position downstream the hydrogen oxidation catalyst 30 in the duct member 10. Thereby, ventilation air A will be sucked through the hydrogen oxidation catalyst 30 and in the duct member 10 until it passes the first motorized fan 20.

As depicted in fig. 2, an inlet 12 of the duct member 10 may be configured to form a funnel shape 12, thereby allowing more ventilation air A to pass therethrough.

With reference to fig. 3, a schematic illustration of a hydrogen powered system 100 is depicted. The hydrogen powered system 100 comprises a hydrogen powered system compartment 110 comprising one or more hydrogen consumers 112 and a hydrogen tank compartment 120 for storing one or more hydrogen tanks 122, 124, and further comprising a hydrogen removal arrangement 1 according to any one of the examples disclosed herein. The hydrogen powered system 100 may be a system as depicted in fig. 1. The hydrogen tanks 122, 124 are arranged to provide hydrogen to the one or more hydrogen consumers 112, which for example may be fuel cells.

The duct member 10 may as depicted be mounted at a position at least partly above the hydrogen powered system compartment 110 and the hydrogen tank compartment 120, as seen with respect to a vertical direction v of the fuel cell system 100. As shown, ventilation air A may be arranged to flow through the hydrogen powered system compartment 110 and the hydrogen powered system compartment 110, such as in an L-shaped flowpath.

In this example, the hydrogen removal arrangement 1 is mounted in or in the vicinity of a ventilation system 130 of the hydrogen powered system 100. The ventilation system 130 comprises an auxiliary motorized fan 132 which is fluidly connected to the hydrogen powered system compartment 110 and the hydrogen tank compartment 120. The auxiliary motorized fan 132 is located outside the duct member 10 and is mainly configured for being used during use of the hydrogen powered system 100, e.g. when the vehicle 200 is driving. As such, by way of example, the auxiliary motorized fan 132 may be a fan with a larger ventilation capacity compared to the first motorized fan 20, and the control unit 50 may be configured to activate and/or increase the speed of the auxiliary motorized fan 132 during use when the first temperature measured by the first temperature sensor 40 exceeds a first threshold and/or when the temperature gradient measured by the first and the second temperature sensors 40, 42 exceeds a second threshold. Accordingly, if any larger hydrogen leaks are occurring, the auxiliary motorized fan 132 can support in extracting more ventilation air A from the hydrogen powered system 100. Thereby, the explosion risk may be further reduced.

The hydrogen powered system 100 may further be arranged to extract purge gas therefrom during use. For example, purge gas from the fuel cells 112 and/or from the hydrogen tanks 122, 124, may be released when required, and the hydrogen powered system 100 may be arranged to extract the purge gas through the duct member 10. This may e.g. be done by activating the first motorized fan 20 when purge gas is extracted, and/or by deactivating the auxiliary motorized fan 132 when purge gas is extracted, and/or by directing the purge gas to the inlet 12 of the duct member 10, e.g. by closing/opening one or more ventilation valves (not shown) of the ventilation system 130 when purge gas is extracted.

With reference to figs. 4a-b, flowcharts of methods according to examples of the disclosure are depicted. Accordingly, figs. 4a-b depict examples of a method for controlling a hydrogen removal arrangement 1 for a hydrogen powered system 100, e.g. as shown in figs. 1-3.

The method comprises:
S1: measuring, by the first temperature sensor 40, a first temperature of the hydrogen oxidation catalyst 30 during use,
S2: controlling, by the control unit, the speed of the first motorized fan 20 during use in dependence on the first temperature measured by the first temperature sensor 40.

Controlling the speed of the first motorized fan 20 may comprise increasing the speed of the first motorized fan 20 during use in dependence on an increase of the first temperature measured by the first temperature sensor 40.

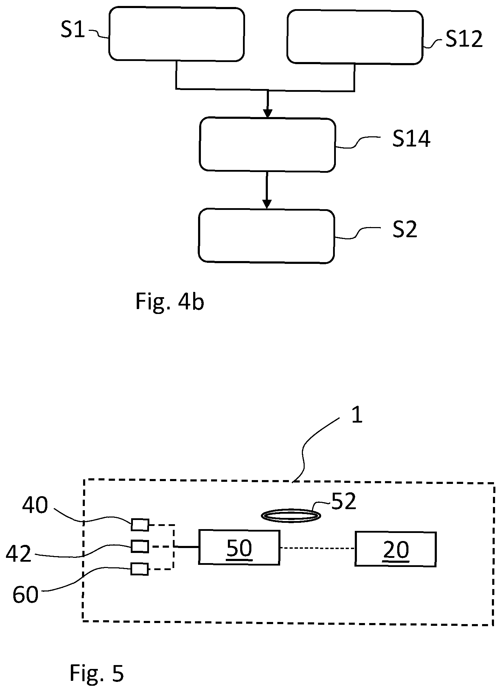

With reference to fig. 4b, the method may further comprise:
S12: measuring, by the second temperature sensor 42, a second temperature of the hydrogen oxidation catalyst 30 during use,
S14: determining, by the control unit 50, a temperature gradient over the hydrogen oxidation catalyst 30 by the measured first and second temperatures, and wherein controlling the speed of the first motorized fan 20 comprises increasing the speed of the first motorized fan 20 during use in dependence on an increase of the temperature gradient.

Fig. 5. is a schematic view of a hydrogen removal arrangement 1 according to an example of the disclosure. The hydrogen removal arrangement 1 may for example comprise a duct member 10 as shown in fig. 2. Fig. 5 depicts the above mentioned first temperature sensor 40, second temperature sensor 42 and hydrogen sensor 60. The sensors 40, 42, 60 are communicatively connected to the control unit 50. The control unit 50 is communicatively connected to the first motorized fan 20. All communicative connections between the parts are illustrated by dashed lines. The communication may be performed by wired and/or wireless communication techniques. The control unit 50 may comprise a computer program product 52 comprising program code for performing a method of any of the herein disclosed examples.

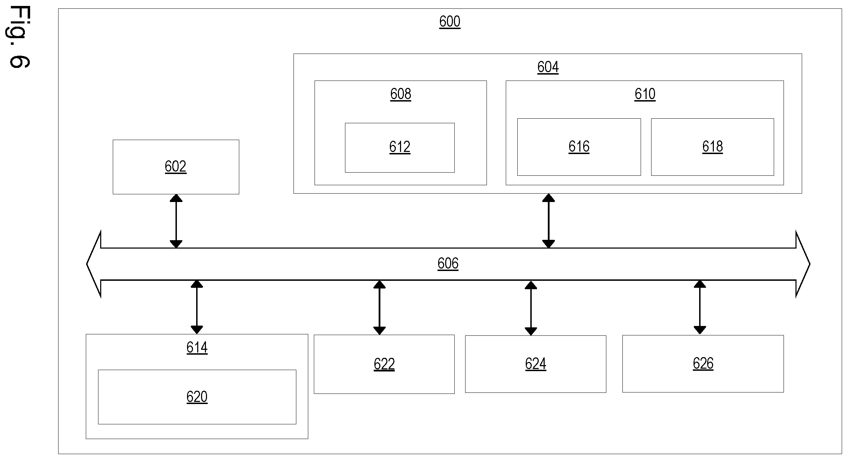

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out the steps described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

In the drawings and specification, there have been disclosed aspects for purposes of illustration only and not for purposes of limitation, the scope of the inventive concepts being set forth in the following claims.

## Claims

1. A hydrogen powered system (100) comprising a hydrogen powered system compartment (110) comprising one or more hydrogen consumers (112) and a hydrogen tank compartment (120) for storing one or more hydrogen tanks (122, 124), and further comprising a hydrogen removal arrangement (1), the hydrogen removal arrangement (1) comprising:
- a duct member (10) arranged to be fluidly connected to the hydrogen powered system compartment (110) and the hydrogen tank compartment (120), and further arranged to extract ventilation air (A) therethrough from the hydrogen powered system compartment (110) and the hydrogen tank compartment (120) to an external environment during use,
- a first motorized fan (20) associated with the duct member (10) for extracting the ventilation air (A) through the duct member (10),
- a hydrogen oxidation catalyst (30) provided in the duct member (10) for oxidizing hydrogen,
- a first temperature sensor (40) for measuring a first temperature of the hydrogen oxidation catalyst (30) during use, and
- a control unit (50) for controlling a speed of the first motorized fan (20), wherein the control unit (50) is communicatively connected to the first motorized fan (20) and to the first temperature sensor (40), and wherein the control unit (50) is configured to control the speed of the first motorized fan (20) during use in dependence on the first temperature measured by the first temperature sensor (40).

2. The hydrogen powered system (100) according to claim 1, wherein the control unit (50) is configured to increase the speed of the first motorized fan (20) during use in dependence on an increase of the first temperature measured by the first temperature sensor (40).

3. The hydrogen powered system (100) according to any one of the preceding claims, further comprising a second temperature sensor (42) for measuring a second temperature of the hydrogen oxidation catalyst (30) during use, wherein the control unit (50) is further communicatively connected to the second temperature sensor (42), wherein the first and second temperature sensors (40, 42) are configured to measure a temperature gradient over the hydrogen oxidation catalyst (30), and wherein the control unit (50) is configured to increase the speed of the first motorized fan (20) during use in dependence on an increase of the temperature gradient measured by the first and the second temperature sensors (40, 42).

4. The hydrogen powered system (100) according to any one of the preceding claims, further comprising a hydrogen sensor (60) for measuring a hydrogen content of the ventilation air (A), wherein the hydrogen sensor (60) is located in the duct member (10) upstream the hydrogen oxidation catalyst (30).

5. The hydrogen powered system (100) according to any one of the preceding claims, wherein the hydrogen oxidation catalyst (30) is adapted to oxidize hydrogen at room temperature.

6. The hydrogen powered system (100) according to any one of the preceding claims, wherein the hydrogen oxidation catalyst (30) comprises platinum as oxidizing agent.

7. The hydrogen powered system (100) according to any one of the preceding claims, wherein the hydrogen oxidation catalyst (30) is a monolithic catalyst.

8. The hydrogen powered system (100) according to any one of the preceding claims, further comprising an auxiliary motorized fan (132) located outside the duct member (10) and fluidly connected to the hydrogen powered system compartment (110) and the hydrogen tank compartment (120), wherein the auxiliary motorized fan (132) is a fan with a larger ventilation capacity compared to the first motorized fan (20), and wherein the control unit (50) is configured to activate and/or increase the speed of the auxiliary motorized fan (132) during use when the first temperature measured by the first temperature sensor (40) exceeds a first threshold and/or when the temperature gradient measured by the first and the second temperature sensors (40, 42) according to claim 3 exceeds a second threshold.

9. The hydrogen powered system (100) according to any one of the preceding claims, further comprising a heater (70) for heating the hydrogen oxidation catalyst (30), wherein the control unit (50) is configured to activate the heater (70) when the first temperature and/or the second temperature according to claim 3 is below a water freezing temperature threshold.

10. The hydrogen powered system (100) according to any one of the preceding claims, further comprising a permanent magnet electric motor (22) for motorizing the first motorized fan (20).

11. The hydrogen powered system (100) according to any one of the preceding claims, wherein the control unit (50) is further configured to issue a warning signal when the first temperature exceeds a third threshold and/or when the temperature gradient according to claim 3 exceeds a fourth threshold, and/or further configured to issue a warning signal when a hydrogen content measured by the hydrogen sensor (60) according to claim 4 exceeds a hydrogen content threshold.

12. The hydrogen powered system (100) according to any one of the preceding claims, wherein the hydrogen removal arrangement (1) is arranged to continuously or repeatedly extract ventilation air (A) through the duct member (10) by use of the first motorized fan (20).

13. The hydrogen powered system (100) according to any one of the preceding claims, wherein the first motorized fan (20) is located inside the duct member (10).

14. The hydrogen powered system (100) according to any one of the preceding claims, wherein the duct member (10) is mounted at a position at least partly above the hydrogen powered system compartment (110) and the hydrogen tank compartment (120), as seen with respect to a vertical direction (v) of the fuel cell system (100).

15. The hydrogen powered system (100) according to any one of the preceding claims, wherein the hydrogen powered system (100) is arranged to extract purge gas therefrom during use, wherein the hydrogen powered system (100) is arranged to extract the purge gas through the duct member (10).

16. A vehicle (200) comprising the hydrogen powered system (100) according to any one of the preceding claims.

17. A method for controlling a hydrogen powered system (100) according to any one of claims 1-15, the method comprising:
- measuring (S1), by the first temperature sensor (40), a first temperature of the hydrogen oxidation catalyst (30) during use,
- controlling (S2), by the control unit (50), the speed of the first motorized fan (20) during use in dependence on the first temperature measured by the first temperature sensor (40).

18. The method according to claim 17, wherein controlling (S2) the speed of the first motorized fan (20) comprises increasing the speed of the first motorized fan (20) during use in dependence on an increase of the first temperature measured by the first temperature sensor (40).

19. The method according to any one of claims 17-18, wherein the hydrogen removal arrangement (1) comprises a second temperature sensor (42) according to claim 3, the method further comprising:
- measuring (S12), by the second temperature sensor (42), a second temperature of the hydrogen oxidation catalyst (30) during use,
- determining (S14), by the control unit (50), a temperature gradient over the hydrogen oxidation catalyst (30) by the measured first and second temperatures, and wherein controlling (S2) the speed of the first motorized fan (20) comprises increasing the speed of the first motorized fan (20) during use in dependence on an increase of the temperature gradient.

## Patentansprüche

1. Wasserstoffbetriebenes System (100), umfassend einen Bereich (110) für das wasserstoffbetriebene System, der einen oder mehrere Wasserstoffverbraucher (112) umfasst, und einen Wasserstofftankbereich (120) zum Lagern eines oder mehrerer Wasserstofftanks (122, 124) und ferner umfassend eine Wasserstoffentfernungsanordnung (1), wobei die Wasserstoffentfernungsanordnung (1) Folgendes umfasst:
- ein Kanalelement (10), das so angeordnet ist, dass es mit dem Bereich (110) für das wasserstoffbetriebene System und dem Wasserstofftankbereich (120) strömungsverbunden ist, und das ferner so angeordnet ist, dass es im Betrieb Lüftungsluft (A) aus dem Bereich (110) für das wasserstoffbetriebene System und dem Wasserstofftankbereich (120) durch sich hindurch in die Außenumgebung absaugt,
- einen ersten motorisierten Lüfter (20), der mit dem Kanalelement (10) verbunden ist, um die Lüftungsluft (A) durch das Kanalelement (10) abzusaugen,
- einen Wasserstoff-Oxidationskatalysator (30), der in dem Kanalelement (10) vorgesehen ist, um Wasserstoff zu oxidieren,
- einen ersten Temperatursensor (40), um eine erste Temperatur des Wasserstoff-Oxidationskatalysators (30) im Betrieb zu messen, und
- eine Regeleinheit (50), um eine Drehzahl des ersten motorisierten Lüfters (20) zu regeln, wobei die Regeleinheit (50) kommunikativ mit dem ersten motorisierten Lüfter (20) und mit dem ersten Temperatursensor (40) verbunden ist, und wobei die Regeleinheit (50) dazu konfiguriert ist, die Drehzahl des ersten motorisierten Lüfters (20) im Betrieb in Abhängigkeit von der vom ersten Temperatursensor (40) gemessenen ersten Temperatur zu regeln.

2. Wasserstoffbetriebenes System (100) nach Anspruch 1, wobei die Regeleinheit (50) dazu konfiguriert ist, die Drehzahl des ersten motorisierten Lüfters (20) im Betrieb in Abhängigkeit von einer Erhöhung der vom ersten Temperatursensor (40) gemessenen ersten Temperatur zu erhöhen.

3. Wasserstoffbetriebenes System (100) nach einem der vorhergehenden Ansprüche, das ferner einen zweiten Temperatursensor (42) zum Messen einer zweiten Temperatur des Wasserstoff-Oxidationskatalysators (30) im Betrieb umfasst, wobei die Regeleinheit (50) ferner kommunikativ mit dem zweiten Temperatursensor (42) verbunden ist, wobei der erste und der zweite Temperatursensor (40, 42) dazu konfiguriert sind, einen Temperaturgradienten innerhalb des Wasserstoff-Oxidationskatalysators (30) zu messen, und wobei die Regeleinheit (50) dazu konfiguriert ist, die Drehzahl des ersten motorisierten Lüfters (20) im Betrieb in Abhängigkeit von einer Erhöhung des von dem ersten und dem zweiten Temperatursensor (40, 42) gemessenen Temperaturgradienten zu erhöhen.

4. Wasserstoffbetriebenes System (100) nach einem der vorhergehenden Ansprüche, das ferner einen Wasserstoffsensor (60) zum Messen eines Wasserstoffgehalts in der Lüftungsluft (A) umfasst, wobei sich der Wasserstoffsensor (60) im Kanalelement (10) dem Wasserstoff-Oxidationskatalysator (30) nachgelagert befindet.

5. Wasserstoffbetriebenes System (100) nach einem der vorhergehenden Ansprüche, wobei der Wasserstoff-Oxidationskatalysator (30) dazu ausgelegt ist, Wasserstoff bei Raumtemperatur zu oxidieren.

6. Wasserstoffbetriebenes System (100) nach einem der vorhergehenden Ansprüche, wobei der Wasserstoff-Oxidationskatalysator (30) Platin als Oxidationsmittel umfasst.

7. Wasserstoffbetriebenes System (100) nach einem der vorhergehenden Ansprüche, wobei der Wasserstoff-Oxidationskatalysator (30) ein monolithischer Katalysator ist.

8. Wasserstoffbetriebenes System (100) nach einem der vorhergehenden Ansprüche, das ferner einen motorisierten Zusatzlüfter (132) umfasst, der sich außerhalb des Kanalelements (10) befindet und mit dem Bereich (110) für das wasserstoffbetriebene System und dem Wasserstofftankbereich (120) strömungsverbunden ist, wobei der motorisierte Zusatzlüfter (132) ein Lüfter mit einer im Vergleich zum ersten motorisierten Lüfter (20) größeren Lüftungsleistung ist, und wobei die Regeleinheit (50) dazu konfiguriert ist, die Drehzahl des motorisierten Zusatzlüfters (132) im Betrieb zu aktivieren und/oder zu erhöhen, wenn die vom ersten Temperatursensor (40) gemessene erste Temperatur einen ersten Schwellenwert überschreitet und/oder wenn der von dem ersten und dem zweiten Temperatursensor (40, 42) nach Anspruch 3 gemessene Temperaturgradient einen zweiten Schwellenwert überschreitet.

9. Wasserstoffbetriebenes System (100) nach einem der vorhergehenden Ansprüche, das ferner eine Heizvorrichtung (70) zum Erwärmen des Wasserstoff-Oxidationskatalysators (30) umfasst, wobei die Regeleinheit (50) dazu konfiguriert ist, die Heizvorrichtung (70) zu aktivieren, wenn die erste Temperatur und/oder die zweite Temperatur nach Anspruch 3 unterhalb eines Schwellenwerts für die Gefriertemperatur von Wasser liegt.

10. Wasserstoffbetriebenes System (100) nach einem der vorhergehenden Ansprüche, das ferner einen Permanentmagnet-Elektromotor (22) für den motorischen Antrieb des ersten motorisierten Lüfters (20) umfasst.

11. Wasserstoffbetriebenes System (100) nach einem der vorhergehenden Ansprüche, wobei die Regeleinheit (50) ferner dazu konfiguriert ist, ein Warnsignal auszugeben, wenn die erste Temperatur einen dritten Schwellenwert überschreitet und/oder wenn der Temperaturgradient nach Anspruch 3 einen vierten Schwellenwert überschreitet, und/oder ferner dazu konfiguriert ist, ein Warnsignal auszugeben, wenn ein vom Wasserstoffsensor (60) nach Anspruch 4 gemessener Wasserstoffgehalt einen Schwellenwert für den Wasserstoffgehalt überschreitet.

12. Wasserstoffbetriebenes System (100) nach einem der vorhergehenden Ansprüche, wobei die Wasserstoffentfernungsanordnung (1) dazu konfiguriert ist, unter Verwendung des ersten motorisierten Lüfters (20) kontinuierlich oder wiederholt Lüftungsluft (A) durch das Kanalelement (10) abzusaugen.

13. Wasserstoffbetriebenes System (100) nach einem der vorhergehenden Ansprüche, wobei sich der erste motorisierte Lüfter (20) im Inneren des Kanalelements (10) befindet.

14. Wasserstoffbetriebenes System (100) nach einem der vorhergehenden Ansprüche, wobei das Kanalelement (10) an einer Position montiert ist, die bei Betrachtung in Bezug auf eine vertikale Richtung (v) des Brennstoffzellensystems (100) mindestens teilweise über dem Bereich (110) für das wasserstoffbetriebene System und dem Wasserstofftankbereich (120) liegt.

15. Wasserstoffbetriebenes System (100) nach einem der vorhergehenden Ansprüche, wobei das wasserstoffbetriebene System (100) dazu konfiguriert ist, im Betrieb Reinigungsgas daraus abzusaugen, wobei das wasserstoffbetriebene System (100) so angeordnet ist, dass es das Reinigungsgas durch das Kanalelement (10) absaugt.

16. Fahrzeug (200), das das wasserstoffbetriebene System (100) nach einem der vorhergehenden Ansprüche umfasst.

17. Verfahren zum Steuern eines wasserstoffbetriebenen Systems (100) nach einem der Ansprüche 1-15, wobei das Verfahren Folgendes umfasst:
- Messen (S1) einer ersten Temperatur des Wasserstoff-Oxidationskatalysators (30) im Betrieb durch den ersten Temperatursensor (40),
- Regeln (S2) der Drehzahl des ersten motorisierten Lüfters (20) im Betrieb durch die Regeleinheit (50) in Abhängigkeit von der vom ersten Temperatursensor (40) gemessenen ersten Temperatur.

18. Verfahren nach Anspruch 17, wobei das Regeln (S2) der Drehzahl des ersten motorisierten Lüfters (20) das Erhöhen der Drehzahl des ersten motorisierten Lüfters (20) im Betrieb in Abhängigkeit von einer Erhöhung der vom ersten Temperatursensor (40) gemessenen ersten Temperatur umfasst.

19. Verfahren nach einem der Ansprüche 17-18, wobei die Wasserstoffentfernungsanordnung (1) einen zweiten Temperatursensor (42) nach Anspruch 3 umfasst, wobei das Verfahren ferner Folgendes umfasst:
- Messen (S12) einer zweiten Temperatur des Wasserstoff-Oxidationskatalysators (30) im Betrieb durch den zweiten Temperatursensor (42),
- Bestimmen (S14) eines Temperaturgradienten innerhalb des Wasserstoff-Oxidationskatalysators (30) mit den gemessenen ersten und zweiten Temperaturen durch die Regeleinheit (50), und wobei das Regeln (S2) der Drehzahl des ersten motorisierten Lüfters (20) das Erhöhen der Drehzahl des ersten motorisierten Lüfters (20) im Betrieb in Abhängigkeit von einer Erhöhung des Temperaturgradienten umfasst.

## Revendications

1. Système alimenté par hydrogène (100) comprenant un compartiment de système alimenté par hydrogène (110) comprenant un ou plusieurs consommateurs d'hydrogène (112) et un compartiment de réservoirs d'hydrogène (120) pour stocker un ou plusieurs réservoirs d'hydrogène (122, 124), et comprenant en outre un dispositif d'élimination d'hydrogène (1), le dispositif d'élimination d'hydrogène (1) comprenant :
- un élément conduite (10) disposé de manière à être raccordé de manière fluidique au compartiment du système alimenté par hydrogène (110) et au compartiment du réservoir d'hydrogène (120), et disposé de plus pour extraire l'air de ventilation (A) à travers celui-ci du compartiment du système à hydrogène (110) et du compartiment de réservoirs d'hydrogène (120) vers un environnement extérieur en cours d'utilisation,
- un premier ventilateur motorisé (20) associé à l'élément conduite (10) pour extraire l'air de ventilation (A) à travers l'élément conduite (10),
- un catalyseur d'oxydation d'hydrogène (30) prévu dans l'élément conduite (10) pour l'oxydation de l'hydrogène,
- un premier capteur de température (40) pour mesurer une première température du catalyseur d'oxydation d'hydrogène (30) en cours d'utilisation, et
- une unité de commande (50) pour commander une vitesse du premier ventilateur motorisé (20), l'unité de commande (50) étant reliée de manière communicante au premier ventilateur motorisé (20) et au premier capteur de température (40), et l'unité de commande (50) étant configurée pour commander la vitesse du premier ventilateur motorisé (20) en cours d'utilisation en fonction de la première température mesurée par le premier capteur de température (40).

2. Système alimenté par hydrogène (100) selon la revendication 1, dans lequel l'unité de commande (50) est configurée pour augmenter la vitesse du premier ventilateur motorisé (20) en cours d'utilisation en fonction d'une augmentation de la première température mesurée par le premier capteur de température (40).

3. Système alimenté par hydrogène (100) selon l'une quelconque des revendications précédentes, comprenant en outre un second capteur de température (42) pour mesurer une seconde température du catalyseur d'oxydation d'hydrogène (30) en cours d'utilisation, de l'unité de commande (50) étant en outre connectée de manière communicante au second capteur de température (42), les premier et second capteurs de température (40, 42) étant configurés pour mesurer un gradient de température sur le catalyseur d'oxydation d'hydrogène (30), et l'unité de commande (50) étant configurée pour augmenter la vitesse du premier ventilateur motorisé (20) en cours d'utilisation en fonction d'une augmentation du gradient de température mesuré par les premier et second capteurs de température (40, 42).

4. Système alimenté par hydrogène (100) selon l'une quelconque des revendications précédentes, comprenant en outre un capteur d'hydrogène (60) pour mesurer une teneur en hydrogène de l'air de ventilation (A), le capteur d'hydrogène (60) étant situé dans l'élément conduite (10) en amont du catalyseur d'oxydation d'hydrogène (30).

5. Système alimenté par hydrogène (100) selon l'une quelconque des revendications précédentes, dans lequel le catalyseur d'oxydation d'hydrogène (30) est adapté pour oxyder l'hydrogène à température ambiante.

6. Système alimenté par hydrogène (100) selon l'une quelconque des revendications précédentes, dans lequel le catalyseur d'oxydation d'hydrogène (30) comprend du platine en tant qu'agent oxydant.

7. Système alimenté par hydrogène (100) selon l'une quelconque des revendications précédentes, dans lequel le catalyseur d'oxydation d'hydrogène (30) est un catalyseur monolithique.

8. Système alimenté par hydrogène (100) selon l'une quelconque des revendications précédentes, comprenant en outre un ventilateur motorisé auxiliaire (132) situé à l'extérieur de l'élément conduite (10) et relié de manière fluidique au compartiment du système alimenté par hydrogène (110) et au compartiment de réservoirs d'hydrogène (120), le ventilateur motorisé auxiliaire (132) étant un ventilateur avec une capacité de ventilation supérieure à celle du premier ventilateur motorisé (20), et l'unité de commande (50) étant configurée pour activer et/ou augmenter la vitesse du ventilateur motorisé auxiliaire (132) en cours d'utilisation lorsque la première température mesurée par le premier capteur de température (40) dépasse un premier seuil et/ou lorsque le gradient de température mesuré par les premier et second capteurs de température (40, 42) selon la revendication 3 dépasse un deuxième seuil.

9. Système alimenté par hydrogène (100) selon l'une quelconque des revendications précédentes, comprenant en outre un dispositif de chauffage (70) pour chauffer le catalyseur d'oxydation d'hydrogène (30), l'unité de commande (50) étant configurée pour activer le dispositif de chauffage (70) lorsque la première température et/ou la seconde température selon la revendication 3 est inférieure à un seuil de température de congélation de l'eau.

10. Système alimenté par hydrogène (100) selon l'une quelconque des revendications précédentes, comprenant en outre un moteur électrique à aimant permanent (22) pour motoriser le premier ventilateur motorisé (20).

11. Système alimenté par hydrogène (100) selon l'une quelconque des revendications précédentes, dans lequel l'unité de commande (50) est en outre configurée pour émettre un signal d'avertissement lorsque la première température dépasse un troisième seuil et/ou lorsque le gradient de température selon la revendication 3 dépasse un quatrième seuil, et/ou configurée en outre pour émettre un signal d'avertissement lorsqu'une teneur en hydrogène mesurée par le capteur d'hydrogène (60) selon la revendication 4 dépasse un seuil de teneur en hydrogène.

12. Système alimenté par hydrogène (100) selon l'une quelconque des revendications précédentes, dans lequel le dispositif d'élimination d'hydrogène (1) est agencé pour extraire de manière continue ou répétée de l'air de ventilation (A) à travers l'élément conduite (10) en utilisant le premier ventilateur motorisé (20).

13. Système alimenté par hydrogène (100) selon l'une quelconque des revendications précédentes, dans lequel le premier ventilateur motorisé (20) est situé à l'intérieur de l'élément conduite (10).

14. Système alimenté par hydrogène (100) selon l'une quelconque des revendications précédentes, dans lequel l'élément conduite (10) est monté à une position au moins partiellement au-dessus du compartiment du système alimenté par hydrogène (110) et du compartiment de réservoirs d'hydrogène (120), vu par rapport à une direction verticale (v) du système de pile à combustible (100).

15. Système alimenté par hydrogène (100) selon l'une quelconque des revendications précédentes, le système alimenté à l'hydrogène (100) étant agencé pour en extraire le gaz de purge en cours d'utilisation, le système alimenté par hydrogène (100) étant agencé pour extraire le gaz de purge à travers l'élément conduite (10).

16. Véhicule (200) comprenant le système alimenté par hydrogène (100) selon l'une quelconque des revendications précédentes.

17. Procédé de commande d'un système alimenté par hydrogène (100) selon l'une quelconque des revendications 1 à 15, le procédé comprenant :
- la mesure (S1), par le premier capteur de température (40), d'une première température du catalyseur d'oxydation d'hydrogène (30) en cours d'utilisation,
- la commande (S2), par l'unité de commande (50), de la vitesse du premier ventilateur motorisé (20) en cours d'utilisation en fonction de la première température mesurée par le premier capteur de température (40).

18. Procédé selon la revendication 17, dans lequel la commande (S2) de la vitesse du premier ventilateur motorisé (20) comprend l'augmentation de la vitesse du premier ventilateur motorisé (20) en cours d'utilisation en fonction d'une augmentation de la première température mesurée par le premier capteur de température (40).

19. Procédé selon l'une quelconque des revendications 17 à 18, dans lequel le dispositif d'élimination d'hydrogène (1) comprend un second capteur de température (42) selon la revendication 3, le procédé comprenant en outre :
- la mesure (S12), par le second capteur de température (42), d'une seconde température du catalyseur d'oxydation d'hydrogène (30) en cours d'utilisation,
- la détermination (S14), par l'unité de commande (50), d'un gradient de température sur le catalyseur d'oxydation d'hydrogène (30) par les première et seconde températures mesurées, et la commande (S2) de la vitesse du premier ventilateur motorisé (20) comprenant l'augmentation de la vitesse du premier ventilateur motorisé (20) en cours d'utilisation en fonction d'une augmentation du gradient de température.
